# DEMANDE DE BREVET EUROPEEN

(11) **EP 4 729 876 A1**
(43) Date de publication de la demande: **22.04.2026**
(21) Numéro de dépôt: 25207820.9
(22) Date de dépôt: 09.10.2025
(51) Int. Cl.: F41G 7/00, G01S 7/40, G01S 7/497

(54) **PROCÉDÉ ET SYSTÈME DE SIMULATION D'UNE CIBLE AÉRIENNE À L AIDE D'UN DRONE POURVU D'AU MOINS DEUX GÉNÉRATEURS DE SIGNAL**

(30) Priorité: 15.10.2024 FR 2411114
(71) Demandeur: MBDA France, 92350 Le Plessis-Robinson (FR)
(72) Inventeur: LE LOUËT, Florian, 92350 Le Plessis-Robinson (FR)
(74) Mandataire: Gevers & Orès

(57) **Abrégé**

- Le système (1) de simulation d'au moins une cible aérienne, comprend au moins un drone (3), ledit drone (3) étant équipé d'un premier générateur de signal (10) d'un premier type, qui est apte à émettre un signal (S1B) représentatif d'une cible aérienne (2) à simuler, et d'au moins un second générateur de signal (11) d'un second type différent dudit premier type, qui est également apte à émettre un signal (S2) représentatif de ladite cible aérienne (2) à simuler, ledit système (1) permettant ainsi de tester, de façon simple, efficace et peu couteuse, à l'aide d'un seul drone (3), des senseurs (12, 13) de types différents d'un système de surveillance (8), ledit système (1) étant ainsi particulièrement approprié pour faire partie d'un système de test (9) destiné à tester un système de surveillance (8) multi-senseur hétérogène.

## Description

### Domaine technique

La présente invention concerne un procédé et un système de simulation d'une cible aérienne à l'aide d'au moins un drone pourvu d'au moins deux générateurs de signal.

Bien que non exclusivement, un tel système de simulation de cible aérienne peut être utilisé pour tester la capacité de systèmes précisés ci-dessous, à détecter et à suivre des cibles aériennes telles que précisées ci-dessous.

### Etat de la technique

Par le document EP3 296 760 B1, on connaît un procédé et un système de test de systèmes radar. Ce système de test comprend un drone que l'on fait voler à proximité du système radar à tester. Ce drone est équipé de moyens aptes à recevoir des signaux radar du système radar, à traiter les signaux radars reçus, à générer un signal radar de réponse et à émettre ce signal radar de réponse en direction du radar. Ce signal radar de réponse est formé de manière à simuler un écho radar d'une cible mobile fictive que l'on veut simuler. Cette cible mobile fictive peut représenter un missile balistique.

Ce système de test présente l'inconvénient d'être en mesure de tester uniquement des systèmes radar.

Or, un système de protection, destiné notamment à protéger un site ou des navires contre des attaques aériennes potentielles, comprend, généralement, différents moyens (ou senseurs) de détection de cibles ennemies, et pas uniquement des systèmes radar. Le système de test usuel précité n'est donc pas en mesure de tester un système de surveillance, tel qu'utilisé en général actuellement, notamment de type multi-senseur hétérogène.

Il existe donc un besoin de pouvoir disposer d'un système permettant d'aider à tester un système de surveillance, comprenant notamment des moyens (ou senseurs) de détection de cibles aériennes de types différents.

### Exposé de l'invention

La présente invention a pour objet de satisfaire ce besoin. Elle concerne un système de simulation d'au moins une cible aérienne, qui comprend au moins un drone, ledit drone étant équipé d'un premier générateur de signal d'un premier type, qui est monté sur le drone et qui est apte à émettre un signal représentatif d'une cible aérienne à simuler.

Selon l'invention, ledit drone est également équipé d'au moins un second générateur de signal d'un second type différent dudit premier type, qui est également monté sur le drone et qui est également apte à émettre un signal représentatif de ladite cible aérienne à simuler.

Ainsi, grâce à l'invention, le système de simulation de cible aérienne est en mesure de former et d'émettre, par l'intermédiaire d'au moins deux générateurs de signal différents montés sur un seul et même drone, des signaux de types différents (par exemple infrarouge, radiofréquence, visible, coopératif) tels que précisés ci-dessous. Cette solution est simple, efficace et peu couteuse puisqu'elle permet, avec l'utilisation d'un seul drone, de pouvoir générer au moins deux types de signaux différents de simulation de cible.

Ainsi, si ce système de simulation de cible aérienne est utilisé pour tester un système, notamment un système surveillance et/ou les différentes chaînes d'un système d'arme, il est en mesure de tester, à la fois, des senseurs (ou moyens de détection) différents, par exemple un radar et un senseur infrarouge, de ce système, à partir du moment où ces senseurs sont localisés au même endroit ou à proximité l'un de l'autre comme précisé ci-dessous. Ces senseurs peuvent être montés à poste fixe (en permanence), ou être déployés sur des véhicules ou sur des navires (non en permanence), en étant montés par exemple sur des trépieds.

Le système de simulation de cible aérienne est donc particulièrement approprié pour faire partie d'un système de test destiné à tester un système (notamment, mais non exclusivement de surveillance) multi-senseur hétérogène (c'est-à-dire comportant une pluralité de senseurs (ou capteurs ou détecteurs) employant des technologies différentes).

Le système de simulation est apte à simuler une cible aérienne qui est simulée comme étant située à une distance donnée à l'aide du drone volant à une distance plus réduite. Le système de simulation est ainsi en mesure de simuler une cible aérienne qui est simulée comme étant située à une distance beaucoup plus importante du système surveillance que ne l'est effectivement le drone.

De plus, de façon avantageuse, ledit premier type et/ou ledit second type correspondent à au moins l'un des types suivants de générateur de signal :
- un générateur de signal radiofréquence ;
- un générateur de signal infrarouge ;
- un générateur de signal visible ;
- un générateur de signal coopératif.

Dans un mode de réalisation préféré, le système de simulation comporte un unique calculateur qui est monté sur le drone et qui participe à la commande de tous les générateurs de signal équipant le drone.

Plus particulièrement, bien que non exclusivement, une cible aérienne apte à être simulée par le système de simulation peut correspondre à l'un des engins volants suivants :
- un avion, par exemple un avion de chasse, un avion de ligne ou un avion de tourisme ;
- un planeur, notamment un planeur hypersonique, ou un ULM, et de manière plus générale tout objet volant de type aérobie ;
- un missile, par exemple balistique (manœuvrant ou non) ou hypersonique ou subsonique ou supersonique ;
- une roquette.

Dans un autre mode de réalisation particulier, la cible aérienne peut également correspondre à un engin mobile qui se déplace à une faible vitesse et à une hauteur (par rapport au sol) proche de 0 mètre. Un tel engin mobile peut notamment correspondre à un navire.

En outre, dans un mode de réalisation particulier, ledit système de simulation comprend une pluralité de drones, dont au moins certains sont pourvus d'au moins deux générateurs de signal de types différents, chacun desdits drones étant configuré pour simuler une cible aérienne différente de celle simulée par un autre drone. Ce mode de réalisation préféré permet donc de simuler simultanément une pluralité de cibles aériennes différentes, une telle situation correspondant par exemple à un scénario d'attaque pour lequel de nombreuses cibles (ou menaces) aériennes ennemies sont envoyées en même temps pour attaquer une zone à surveiller et à protéger.

Dans un mode de réalisation particulier, ledit système de simulation comprend au moins deux drones pourvus de générateur de signal, dont au moins l'un est pourvu d'au moins deux générateurs de signal de types différents, lesdits drones formant un ensemble de drones, et ledit système comporte un dispositif de synchronisation configuré pour synchroniser tous les drones de l'ensemble de drones afin qu'ils simulent une seule et même cible. Avantageusement, le dispositif de synchronisation est configuré pour synchroniser les drones de l'ensemble de drones, à la fois :
- en temps (temporellement) ;
- dans l'espace (spatialement, à savoir en position et en attitude) ; et
- pour être cohérents par rapport à la cible aérienne qu'ils simulent et pour éviter des risques de collision (entre les drones et des éléments extérieurs au système).

Par ailleurs, de façon avantageuse, ledit système de simulation comprend également un dispositif de gestion de mission configuré pour pouvoir communiquer avec le ou les drones.

Avantageusement, le dispositif de gestion de mission comporte au moins l'une des unités suivantes :
- au moins une unité de préparation de mission ;
- au moins une unité de réalisation de mission ;
- au moins une unité de contrôle de mission.

Par ailleurs, de façon avantageuse, ledit système de simulation comprend également au moins un dispositif de modification de trajectoire qui est configuré pour pouvoir modifier (en temps réel) la trajectoire d'au moins un drone. Avantageusement, le système de simulation comprend :
- au moins un dispositif de modification de trajectoire qui fait partie du dispositif de gestion de mission et qui est configuré pour émettre des ordres de correction de trajectoire au drone, qui sont générés automatiquement et/ou par un opérateur ;
   et/ou
- au moins un dispositif de modification de trajectoire qui est monté sur le drone et qui est configuré pour modifier la trajectoire dudit drone.

Dans un mode de réalisation particulier, ledit ou lesdits drones sont des drones multicoptère, qui sont très maniables.

La présente invention concerne également un procédé de simulation d'au moins une cible aérienne, ledit procédé utilisant au moins un drone, ledit procédé comprenant une première étape d'émission au cours de laquelle un premier générateur de signal d'un premier type, qui est monté sur ledit drone, émet un premier signal représentatif d'une cible aérienne à simuler.

Selon l'invention, ledit procédé comporte au moins une seconde étape d'émission au cours de laquelle un second générateur de signal d'un second type différent dudit premier type, qui est également monté sur ledit drone, émet un second signal représentatif de ladite cible aérienne à simuler, ledit premier signal et ledit second signal étant de types différents.

Dans un mode de réalisation particulier, le procédé utilise au moins deux drones pourvus de générateur de signal, dont au moins l'un est pourvu d'au moins deux générateurs de signal de types différents, lesdits drones formant un ensemble de drones, et en ce que tous les drones de l'ensemble de drones sont synchronisés pour simuler une seule et même cible, les drones de l'ensemble de drones étant synchronisés, à la fois :
- en temps ;
- dans l'espace ; et
- pour être cohérents par rapport à la cible aérienne qu'ils simulent, et pour éviter des risques de collision (entre les drones et des éléments extérieurs au système).

La présente invention concerne, en outre, un système de test pour tester un système de surveillance, en particulier d'un système d'arme multi-senseur hétérogène, qui comprend ledit système de surveillance et au moins un système de simulation tel que celui décrit ci-dessus.

De façon avantageuse, des senseurs du système de surveillance, destinés à recevoir les signaux de deux générateurs de signaux équipant un même drone, sont espacés l'un de l'autre d'une distance telle que l'erreur de localisation de cible aérienne qui découle de cette distance et de la distance entre les senseurs et le drone, reste inférieure aux marges d'erreur ou de localisation (par exemple l'ouverture pour un radar ou une caméra) desdits senseurs.

Avantageusement, le système de surveillance comprend comme senseur, au moins certains des éléments suivants :
- un ou plusieurs radars ;
- un ou plusieurs senseurs optiques (infrarouge, TV ou autre), et par exemple un goniomètre ;
- un ou plusieurs senseurs coopératifs (faisant partie d'un dispositif d'identification ami ou ennemi, par exemple de type IFF (pour « Identification Friend or Foe » en anglais) ou de l'infodrone, de l'ADSB, ... ;
- un ou plusieurs senseurs passifs (goniomètre, ELINT (faisant partie d'un système de simulation de communication, SIGINT, ...).

La présente invention concerne, en outre, un système d'arme multi-senseur hétérogène qui comprend au moins un système de test tel que précité.

Ledit système de simulation de cible aérienne et/ou ledit système de test peuvent être utilisés dans de nombreuses applications différentes, et en particulier :
- pour la formation, notamment d'opérateurs du système de surveillance et/ou du système d'arme ;
- pour l'entraînement, notamment d'opérateurs du système de surveillance et/ou du système d'arme ;
- pour la calibration du système de surveillance et/ou du système d'arme ;
- pour des essais du système de surveillance et/ou du système d'arme ;
- pour la validation du système de surveillance et/ou du système d'arme ; et
- pour une démonstration.

La présente invention permet, de manière générale, de tester la chaîne complète d'un système d'arme, depuis la détection jusqu'à l'engagement (hors missile en vol), et ainsi au moins l'une des caractéristiques suivantes :
- la capacité de surveillance, de détection et de suivi de senseurs ;
- le bon comportement des algorithmes du système d'arme qui effectue la fusion de données, le traitement des données pour l'évaluation de la menace, le plan d'engagement, .... ; et
- la chaîne d'engagement avec le bon fonctionnement des algorithmes et des senseurs pendant cette phase.

### Brève description des figures

Les figures annexées feront bien comprendre comment l'invention peut être réalisée. Sur ces figures, des références identiques désignent des éléments semblables.
La figure 1 représente schématiquement un mode de réalisation particulier d'un système de simulation d'une cible aérienne.
La figure 2 est le schéma synoptique d'un drone comprenant un dispositif de génération de signal selon un premier mode de réalisation.
La figure 3 est le schéma synoptique d'un drone comprenant un dispositif de génération de signal selon un second mode de réalisation.
La figure 4 est le schéma synoptique d'un dispositif de gestion de mission faisant partie du système de simulation de cible aérienne.
La figure 5 est un graphique qui permet d'expliquer la distance minimale entre deux senseurs détectant les signaux de deux générateurs de signal montés sur un même drone.
La figure 6 représente schématiquement un mode de réalisation particulier d'un système de simulation d'une pluralité de cibles aériennes.
La figure 7 est le schéma synoptique d'un procédé de simulation de cible aérienne.

### Description détaillée

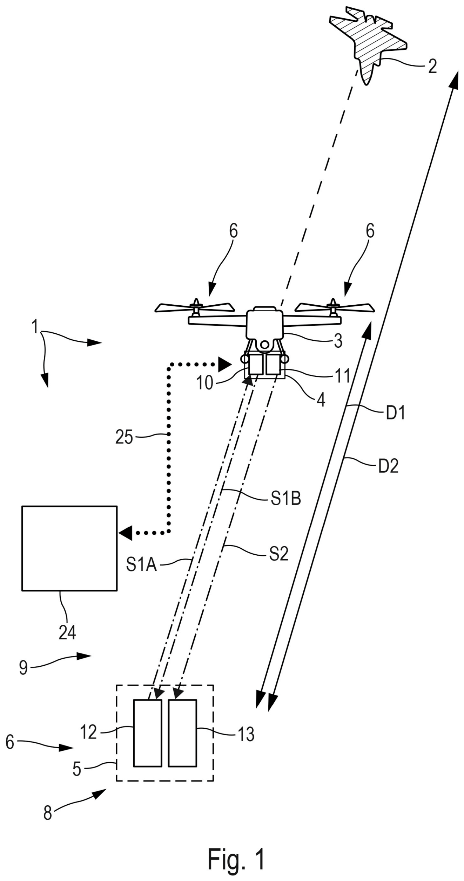

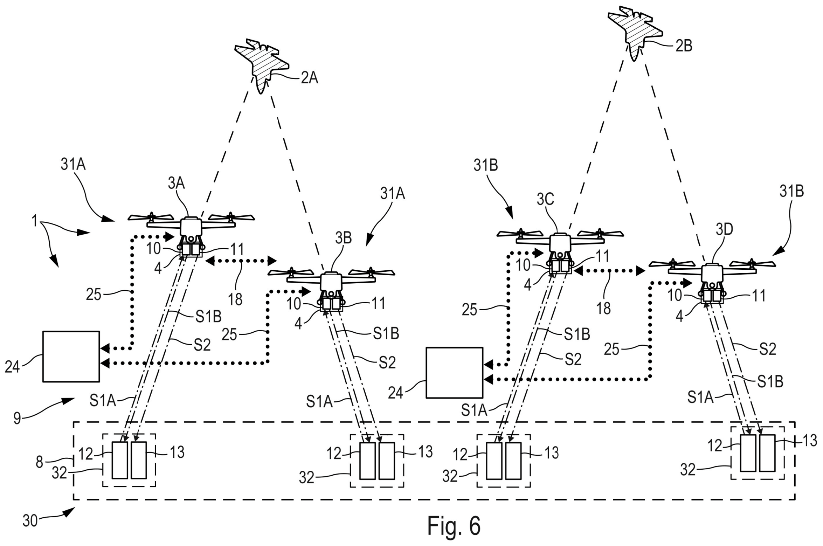

Le système 1 (de simulation de cible aérienne) permettant d'illustrer l'invention et représenté schématiquement dans des modes de réalisation particuliers sur les figures 1 et 6, est destiné à simuler une ou des cibles aériennes 2.

Bien que non exclusivement, ce système 1 (de simulation de cible aérienne) peut faire partie d'un système de test 9 destiné à tester un système de surveillance 8. Le système de surveillance 8 est, de préférence, un système de surveillance de type multi-senseur hétérogène, c'est-à-dire qui comprend une pluralité de senseurs (ou capteurs ou détecteurs) hétérogènes (c'est-à-dire de types différents). Dans l'exemple de la figure 1, le système de surveillance 8 comprend, notamment, un radar 12 et un senseur (ou imageur) infrarouge 13. Le système de surveillance 8 peut également comprendre d'autres senseurs, comme précisé ci-dessous.

Le système 1 comprend, comme représenté sur la figure 1, au moins un drone 3 et un dispositif 4 de génération de signal monté sur le drone 3.

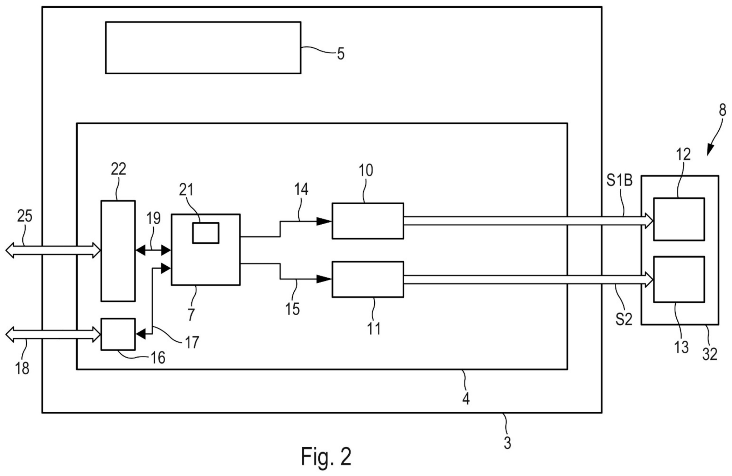

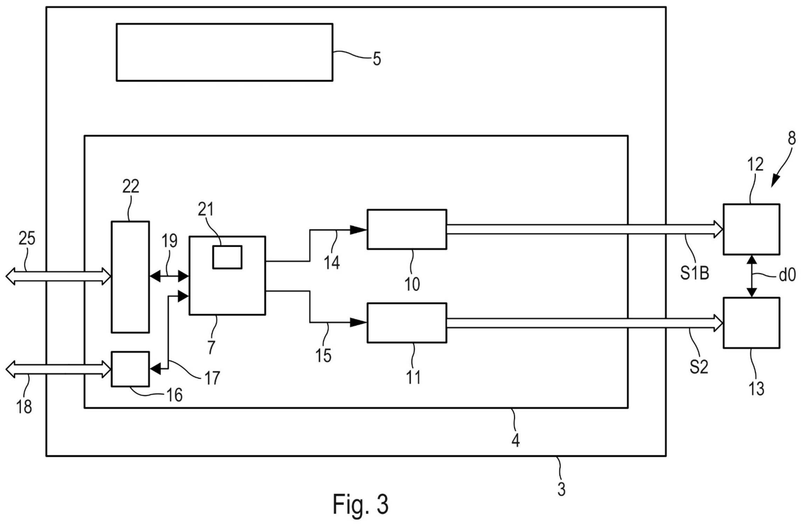

On a représenté sur les figures 2 et 3, à titre d'illustration non limitative, de façon très schématique, un drone 3, c'est-à-dire un aéronef sans pilote, faisant partie du système 1. Le drone ou tous les drones du système 1 peuvent correspondre à un drone 3 de l'une des figures 2 et 3. Le drone 3 comprend des moyens 5 usuels (notamment des moyens de sustentation (voilures tournantes 6 (figure 1), ...) et de génération d'une force d'avancement), qui sont représentés de façon schématique sur les figures 2 et 3 et qui sont formés de manière à faire voler le drone 3. Le drone 3 est de préférence de type multicoptère ou multirotor. Le drone 3 comporte également d'autres équipements précisés ci-dessous.

Selon l'invention, comme représenté sur les figures 1 à 3, le drone 3 est équipé à la fois, au moins :
- d'un générateur de signal 10 d'un premier type, par exemple un générateur de signal radiofréquence, qui fait partie du dispositif 4 de génération de signal (comme représenté sur la figure 2) et qui est apte à émettre un signal S1B représentatif d'une cible aérienne 2 à simuler ; et
- d'un générateur de signal 11 d'un second type (différent dudit premier type), par exemple un générateur de signal infrarouge, qui fait également partie du dispositif 4 de génération de signal (comme représenté sur la figure 2) et qui est également apte à émettre un signal S2 représentatif de la même cible aérienne 2 à simuler.

Le drone 3 comporte deux générateurs de signal de types différents (tels que les générateurs de signal 11 et 12 par exemple) ou plus de deux générateurs de signal de types différents, par exemple trois ou quatre générateurs de signal, qui sont tous aptes à émettre un signal représentatif d'une seule et même cible aérienne à simuler.

Dans le cadre de la présente invention, on entend par « simuler une cible aérienne » le fait de générer et d'émettre des signaux, précisés ci-dessous, qui permettent de faire croire à un système de surveillance, tel que le système de surveillance 8, que ces signaux proviennent d'une cible aérienne réelle.

Le système 1 est ainsi apte à simuler une cible aérienne qui est simulée comme étant située à une distance élevée du système de surveillance 8 à partir d'un drone 3 volant à une distance bien plus réduite du système de surveillance 8.

A titre d'illustration non limitative :
- le drone 3 du système 1 peut être situé à une distance du système de surveillance 3, telle que la distance D1 sur la figure 1, qui est comprise entre 50 mètres et 2 kilomètres ; et
- le système 1 peut simuler une cible aérienne 2 qui est située (de façon virtuelle) à une distance du système de surveillance 8, telle que la distance D2 sur la figure 1, qui est comprise entre 1 kilomètre (ou, a minima, une distance proche de la distance entre le drone et le système de surveillance 8) et plusieurs centaines de kilomètres.

Sur les figures 1 et 6 très schématiques, les drones et les cibles aériennes ainsi que leurs distances par rapport au système de surveillance 8, ne sont pas représentées à la même échelle pour des raisons de clarté de ces figures.

Par ailleurs, les cibles aériennes à simuler (identifiées par une référence 2, à laquelle on a ajouté des lettres A et B sur la figure 6 pour les différencier entre elles) sont représentées en traits hachurés sur les figures 1 et 6 pour bien mettre en évidence qu'elles sont simulées et donc virtuelles, et ne correspondent pas à un objet aérien réel. Ces cibles aériennes 2 peuvent représenter tout objet volant que l'on souhaite simuler, et en particulier un objet ou engin hostile (ou ennemi). Il peut notamment s'agir d'un avion militaire comme sur l'exemple des figures 1et 6.

Plus généralement, dans le cadre de la présente invention, une cible aérienne 2 peut correspondre au moins à l'un des engins volants suivants :
- un avion, par exemple un avion de chasse, un avion de ligne ou un avion de tourisme ;
- un planeur, notamment un planeur hypersonique, ou un ULM, et de manière plus générale tout objet volant de type aérobie ;
- un missile, par exemple balistique (manœuvrant ou non) ou hypersonique ou subsonique ou supersonique ;
- une roquette.

Dans un mode de réalisation particulier, la cible aérienne peut également correspondre à un engin mobile qui se déplace à une faible vitesse et à une hauteur (par rapport au sol) proche de 0 mètre. Un tel engin mobile peut notamment correspondre à un navire.

Dans un mode de réalisation préféré, le dispositif 4 du drone 3 est pourvu d'une unité centrale 7 (ou calculateur), comme représenté sur les figures 2 et 3.

L'unité centrale 7 est notamment apte à déterminer automatiquement des ordres de guidage utilisés par les moyens 5 pour guider le drone 3. Le drone 3 peut ainsi être guidé automatiquement sans intervention (ou avec une intervention restreinte) d'un opérateur, par exemple pour éviter une collision avec un autre drone et tout simplement pour remplir sa mission, puisque c'est l'unité centrale 7 qui envoie périodiquement des ordres aux moyens 5 pour que la trajectoire à simuler soit correcte. Plus précisément, l'unité centrale 7 envoie des ordres à un autopilote (qui est installé sur un calculateur de contrôle de vol du drone) et c'est l'autopilote qui envoie les ordres au moyens 5. Le drone 3 peut ainsi voler de façon autonome dans ce mode de réalisation particulier.

L'unité centrale 7 est également configurée pour générer et transmettre des ordres :
- via une liaison 14, au générateur de signal 10 (de type radiofréquence) pour qu'il émette un signal S1B approprié, comme également précisé ci-dessous ; et
- via une liaison 15, au générateur de signal 11 (de type infrarouge) pour qu'il émette un signal S2 approprié, comme précisé ci-dessous.

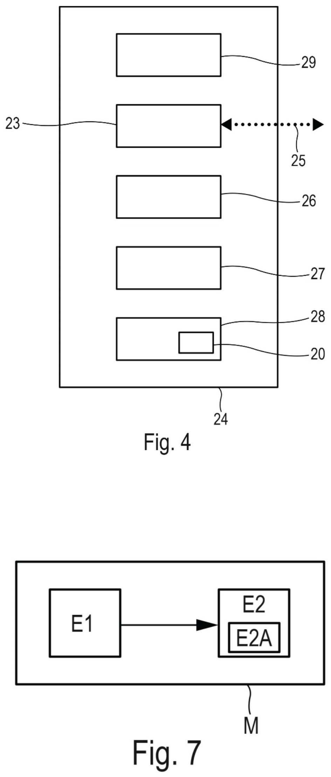

Le système 1 comporte, de plus, un dispositif 24 de gestion de mission, représenté très schématiquement sur la figure 4, qui fait partie du système 1 et qui est apte à communiquer avec le ou les drones 3 du système 1. Le dispositif 24 de gestion de mission est de préférence installé au sol ou sur un véhicule terrestre (ou bien sur un navire).

Pour ce faire, le dispositif 24 comporte une unité d'émission/réception 23 (figure 4) qui coopère avec une unité d'émission/réception 22 (figures 2 et 3) du drone 3 avec lequel il veut communiquer. L'unité d'émission/réception 22 est reliée par l'intermédiaire d'une liaison 19 au calculateur 7 du dispositif 4. Les unités d'émission/réception 22 et 23 sont aptes à échanger des informations, via l'émission et la réception d'ondes électromagnétiques, comme illustré par des doubles flèches 25 sur les figures 1 à 4 et 6.

Chaque drone 3 du système 1 et tous les générateurs de signal 10 et 11 montés sur le drone 3 sont contrôlés par l'unité centrale 7 qui est un calculateur embarqué. De plus, les drones 3 sont :
- soit reliés au dispositif 24 de gestion de mission (situé par exemple au sol), et ceci par une liaison spécifique, comme illustré par les doubles flèches 25 ;
- soit autonomes. Dans ce cas, on prévoit qu'un pilote puisse reprendre la main si nécessaire.

Le système 1 comporte, de plus, au moins l'un des dispositifs de modification de trajectoire suivants :
- un dispositif de modification de trajectoire 20 qui fait partie d'une unité 28 de contrôle du dispositif 24 de gestion de mission (figure 4) et qui est configuré pour émettre des ordres de correction de trajectoire au drone 3, qui sont générés automatiquement et/ou par un opérateur ; et
- un dispositif de modification de trajectoire 21 qui est monté sur le drone 3 et intégré dans le calculateur 7 (figures 2 et 3) et qui est configuré pour modifier la trajectoire dudit drone 3.

Par ailleurs, dans un mode de réalisation particulier, le drone 3 comporte également un dispositif d'émission/réception 16 qui est relié par l'intermédiaire d'une liaison 17 au calculateur 7 (figures 2 et 3) et qui coopère avec un dispositif d'émission/réception 16 (similaire) d'un autre drone 3 avec lequel il peut communiquer. Les dispositifs d'émission/réception 16 de deux drones 3 sont ainsi aptes à échanger des informations, via l'émission et la réception d'ondes électromagnétiques, comme illustré par des doubles flèches 18 sur les figures 2, 3 et 6.

L'unité d'émission/réception 22 et le dispositif d'émission/réception 16 du dispositif 4 peuvent être deux entités physiques différentes ou bien une seule et même entité physique.

Dans les exemples illustratifs et non limitatifs représentés sur les figures 1 et 6, sont représentés des générateurs de signal 10 de type radiofréquence et des générateurs de signal 11 de type infrarouge associés, respectivement, à des radars 12 et à des senseurs (ou imageurs) infrarouges 13. A titre d'exemple non limitatif, sur les figures 1 et 6, un radar 12 et un senseur infrarouge 13 sont montés à chaque fois sur une même plateforme 32.

Toutefois, dans le cadre de la présente invention, le système 1 :
- peut comprendre, en plus ou à la place d'un ou de plusieurs générateurs de signal radiofréquence et/ou d'un ou de plusieurs générateurs de signal infrarouge, un ou plusieurs générateurs de signal visible et/ou un ou plusieurs générateurs de signal coopératif (tels qu'un générateur de signal d'identification ami et/ou un générateur de signal de communication (pour la goniométrie, mais aussi l'écoute électronique de type ELINT)) ; et
- peut être associé à de nombreux types de senseurs, et notamment à :
   · des radars, tels que le radar 2 par exemple ;
   · des senseurs optiques, de type infrarouge (tels que le senseur infrarouge 13 par exemple), TV ou autre, et également à des goniomètres ;
   · des senseurs coopératifs (faisant partie d'un dispositif d'identification ami ou ennemi par exemple de type IFF (pour « Identification Friend or Foe » en anglais) ou infodrone, ou ADSB ;
   · des senseurs passifs (goniomètre (système radiofréquence et système acoustique), ELINT (faisant partie d'un système de simulation de communication), SIGINT, ...).

On décrit ci-après le fonctionnement de quelques générateurs de signal principaux susceptibles de faire partie du système 1.

Le générateur de signal 10 de type radiofréquence comprend, par exemple :
- un détecteur (non représenté) pour détecter un signal radiofréquence initial émis par le radar 12, tel qu'illustré par des flèches S1A en trait mixte sur les figures 1 et 6. Le détecteur peut également atténuer le signal reçu ;
- une unité de traitement (non représentée) pour déterminer et générer un signal radiofréquence de réponse, en fonction du signal radiofréquence initial détecté par le détecteur et de caractéristiques (distance par rapport au radar, vitesse) de la cible aérienne que l'on souhaite simuler. Pour ce faire, l'unité de traitement convertit d'abord le signal reçu en un signal numérique, le traite et recrée un signal radiofréquence (conversion numérique-analogique) ; et
- un émetteur (non représenté) pour émettre ce signal radiofréquence (de réponse) vers le radar 12, tel qu'illustré par des flèches S1B sur les figures 1, 2, 3 et 6. L'émetteur peut également amplifier ou atténuer le signal si besoin.

Lorsqu'il détecte ce signal radiofréquence (de réponse), le radar 12 croît détecter l'écho d'une cible aérienne et ainsi détecter une cible aérienne qui présente les caractéristiques (de distance et de vitesse notamment) prises en compte par l'unité de traitement pour déterminer le signal radiofréquence (de réponse). Les caractéristiques prises en compte par l'unité de traitement peuvent correspondre à des paramètres de mission qui sont définis lors de la préparation de la mission.

En outre, le générateur de signal 11 de type infrarouge est un illuminateur infrarouge, c'est-à-dire un dispositif usuel apte à émettre un signal infrarouge, tel qu'illustré par une flèche S2 sur les figures 1, 2, 3 et 6. Les caractéristiques de ce signal infrarouge, et en particulier son amplitude, sont déterminées pour que le signal infrarouge soit similaire à un signal infrarouge (ou point chaud) émis par une cible aérienne réelle, par exemple un avion, un hélicoptère, un drone, un missile ou un autre engin mobile que l'on souhaite simuler. Dans une variante particulière, le générateur de signal 11 de type infrarouge génère plusieurs points lumineux, pour être le plus représentatif possible de la forme de la cible. Dans ce cas, chaque point lumineux est piloté en amplitude.

Ce signal infrarouge lorsqu'il est émis par le générateur de signal 11 de type infrarouge du drone est détecté par un senseur infrarouge 13 du système de surveillance 8. Le senseur infrarouge 13 du système de surveillance 8 croît ainsi, par la détection de ce signal infrarouge S2 émis depuis le drone 3, détecter une zone chaude d'une cible aérienne réelle (par exemple ses réacteurs ou une autre partie présentant une signature infrarouge caractéristique et connue) et donc détecter cette cible aérienne réelle.

Le dispositif 4 du système 1 peut également comporter un générateur apte à générer un signal coopératif relatif à un système dit coopératif. Le système coopératif peut correspondre à l'un des systèmes suivants :
- un système d'identification ami (ou ennemi) de type IFF (pour « Identification Friend or Foe » en anglais) ;
- un système de surveillance coopératif pour le contrôle du trafic aérien de type « ADS-B » (pour « Automatic Dependent Surveillance-Broadcast » en anglais), pour lequel un dispositif monté sur un avion envoie périodiquement, comme signal coopératif, un signal notamment d'identification de l'avion ;

- un système d'information et d'alerte de type « FLARM » destiné à de petits avions et engins volants qui émet, comme signal coopératif, un signal fournissant des informations sur l'engin volant, notamment pour éviter un risque de collision ;
- un système d'identification coopératif de type « AIS » (pour « Automatic Identification System » en anglais) pour lequel un dispositif monté sur un navire envoie périodiquement, comme signal coopératif, un signal contenant des informations (position, cap, vitesse, ...) sur le navire ; - ...

Ainsi, le système 1 de simulation de cible aérienne est en mesure de former et d'émettre, par l'intermédiaire d'au moins deux générateurs de signal différents, tels que les générateurs de signal 10 et 11 de la figure 1, montés sur un seul et même drone, des signaux de types différents (par exemple infrarouge, radiofréquence, visible, coopératif). Ce système 1 est simple, efficace et peu couteux puisqu'elle permet, avec l'utilisation d'un seul drone, de pouvoir générer au moins deux types de signaux différents de simulation de cible, ce qui permet de limiter le nombre de drones, et donc le besoin en matériel et en télépilote (avec un déploiement un peu plus simple et un coût plus faible).

De plus, ce système 1 est particulièrement bien approprié à des essais dans un espace restreint et il simplifie la simulation de cible pour des plateformes multi-senseurs (c'est-à-dire avec plusieurs senseurs sur la même plateforme (véhicule, petit navire, ...)).

Ainsi, si ce système de simulation 1 de cible aérienne est utilisé pour tester un système, notamment un système surveillance 8 et/ou les différentes chaînes d'un système d'arme 30, il est en mesure de tester, à la fois, des senseurs (ou moyens de détection) différents, par exemple un radar et un senseur infrarouge, de ce système, à partir du moment où ces senseurs sont localisés au même endroit ou à proximité l'un de l'autre.

Dans le mode de réalisation particulier de la figure 2, le système 8 comporte deux senseurs (en l'occurrence le radar 12 et le senseur infrarouge 13) qui sont montés sur la même plateforme 32 (par exemple un véhicule, un petit navire, ...). Dans ce mode de réalisation particulier, le système 8 peut également comporter plus de deux senseurs différents, par exemple trois, quatre, ..., senseurs.

En outre, dans le mode de réalisation particulier de la figure 3, le système 8 comporte deux senseurs (en l'occurrence le radar 12 et le senseur infrarouge 13) qui sont montés sur des plateformes différentes.

Plus précisément, dans ce mode de réalisation particulier, les senseurs du système de surveillance 8, tels que le radar 12 et le senseur infrarouge 13, qui sont destinés à recevoir les signaux de deux générateurs de signaux équipant un même drone 3, tels que les générateurs de signal 10 et 11, sont espacés l'un de l'autre, sur le système de surveillance 8, d'une distance d0 qui est inférieure à une distance maximale.

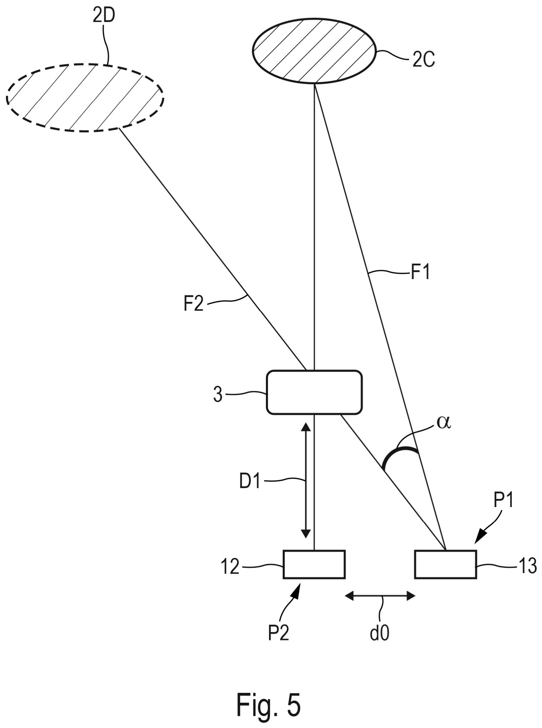

Cette distance d0 (figures 3 et 5) est telle que l'erreur de localisation de cible aérienne qui découle de cette distance d0 et de la distance D1 entre les senseurs (tels que le radar 12 et le senseur infrarouge 13) et le drone 3, reste inférieure aux marges d'erreur (connues) des senseurs 12 et 13. L'erreur de localisation est illustrée sur la figure 5 par un angle α. Cet angle α correspond à l'angle, vu à partir du senseur 13 (à une position P1), entre :
- d'une part, la position 2C simulée de la cible aérienne (en fonction de la position P2 du senseur 12), illustrée par un trait F1 (reliant les positions 2C et P1), et
- d'autre part, la position 2D simulée de la cible aérienne (en fonction de la position P1 du senseur 13), illustrée par un trait F2 (reliant les positions 2D et P1).

De préférence, la distance d0 entre les senseurs est de l'ordre de quelques mètres, et la distance D1 entre le drone et les senseurs est de plusieurs centaines de mètres afin de limiter l'erreur de position de la cible simulée.

En outre, dans un autre mode de réalisation (non représenté), le système de surveillance 8 est une combinaison des modes de réalisation des figures 2 et 3, avec une ou plusieurs plateformes comprenant au moins deux senseurs différents et une ou une ou plusieurs plateformes comprenant un seul senseur. Ces différentes plateformes étant distancées les unes des autres de manière à remplir les conditions précitées (pour qu'une erreur de localisation de cible aérienne reste inférieure aux marges d'erreur des senseurs).

Le système 1, tel que décrit ci-dessus, est en mesure de mettre en œuvre un procédé (non représenté) de simulation d'au moins une cible aérienne, ledit procédé utilisant au moins un drone et comprenant au moins :
- une première étape d'émission au cours de laquelle un premier générateur de signal d'un premier type, équipant ledit drone, émet un premier signal représentatif d'une cible aérienne à simuler ; et
- une seconde étape d'émission au cours de laquelle un second générateur de signal d'un second type différent dudit premier type, équipant également ledit drone émet un second signal représentatif de ladite cible aérienne à simuler, ledit premier signal et ledit second signal étant de types différents.

Par ailleurs, dans un mode de réalisation particulier, représenté sur la figure 6, le système 1 comprend au moins un ensemble 31A, 31B de drones. Chaque ensemble 31A, 31B comprend une pluralité de drones 3. Pour différencier les drones 3 entre eux, on a ajouté des lettres A, B, C et D à la référence 3 sur la figure 6.

Dans le mode de réalisation de la figure 6, le système 1 comprend deux ensembles 31A et 31B de drones.

Dans ce mode de réalisation particulier, chaque ensemble 31A, 31B de drones comprend un couple de drones, à savoir deux drones 3A et 3B pour l'ensemble 31A et deux drones 3C et 3D pour l'ensemble 31B.

Bien entendu, il est également envisageable qu'un ou plusieurs ensembles de drones comprennent plus de deux drones 3, par exemple trois ou quatre drones.

Dans le mode de réalisation particulier, représenté sur la figure 6 :
- l'ensemble 31A de drones comprend donc les drones 3A et 3B qui sont destinés à simuler une même cible aérienne 2A, les drones 3A et 3B étant équipés chacun d'un générateur de signal 10 de type radiofréquence et d'un générateur de signal 11 de type infrarouge ; et
- un ensemble 31B de drones comprend donc les drones 3C et 3D qui sont destinés à simuler une même cible aérienne 2B, les drones 3C et 3D étant équipés chacun d'un générateur de signal 10 de type radiofréquence et d'un générateur de signal 11 de type infrarouge.

Dans ce mode de réalisation particulier, les drones 3A et 3B de l'ensemble 31A sont synchronisés pour simuler la cible aérienne 2A et les drones 3C et 3D de l'ensemble 31B sont synchronisés pour simuler la cible aérienne 2B, comme précisé ci-dessous.

Le système 1 est ainsi en mesure de simuler simultanément deux cibles aériennes 2Aet 2B différentes. Sur l'exemple de la figure 6, les cibles aériennes 2A et 2B sont représentées sous forme d'avion. Bien entendu, les cibles aériennes 2A et 2B peuvent correspondre à deux engins volants de types différents.

Chacun des drones 3 de l'ensemble 31A, 31B du système 1 est équipé d'au moins un générateur de signal apte à émettre un signal représentatif d'une cible aérienne 2 à simuler, et de préférence d'une pluralité de générateurs de signal, et pour chaque ensemble 31A, 31B, au moins l'un des drones 3 est équipé d'au moins deux générateurs de signal.

Dans un mode de réalisation particulier, au moins l'un des drones d'un ensemble de drones peut comporter deux générateurs de signal identiques.

Par ailleurs, le système 1 comprend également un dispositif de synchronisation 29 (figure 4) configuré pour synchroniser les drones 3 de l'ensemble 31A, 31B de drones afin qu'ils simulent une seule et même cible aérienne. Plus précisément, le dispositif de synchronisation 29 est configuré pour synchroniser les drones de l'ensemble 31A, 31B de drones, à la fois :
- en temps (temporellement) ;
- dans l'espace (spatialement) ; et
- pour être cohérents par rapport à la cible aérienne qu'ils simulent, et pour éviter des risques de collision entre les drones et avec des éléments extérieurs au système 1.

Le dispositif de synchronisation 29 synchronise également les charges utiles afin qu'elles soient synchronisées en temps et en termes de paramètres (qui sont liés à chaque type de charge utile). De plus, les drones sont synchronisés de sorte que les signaux de types différents permettent de simuler une seule et même cible aérienne.

Par ailleurs, les unités d'émission/réception 16 (figures 2 et 3) de deux drones 3 (ou de tous les drones 3 du système 1) sont aptes à échanger des informations, via l'émission et la réception d'ondes électromagnétiques, comme illustré par des doubles flèches 18 en pointillés sur la figure 6.

Les échanges entre deux drones 3 peuvent être mis en œuvre de deux manières :
- soit directement entre les drones 3 via leurs unités d'émission/réception 16. Dans ce cas, des échanges peuvent également être réalisés avec le dispositif 24 au sol (s'il est prévu) ;
- soit en passant par le dispositif 24 au sol (qui sert de routeur).

De préférence, les informations échangées ont pour but d'empêcher une collision entre les deux drones. Pour ce faire, les drones s'informent, respectivement, de leur positionnement effectif.

Ces informations de positionnement peuvent également être utilisées pour corriger en temps réel le positionnement des drones 3 de manière à rester représentatifs d'une cible. Ainsi, à titre d'exemple, si le drone 3A (de l'ensemble 31A) ne respecte pas sa trajectoire par exemple à cause du vent, le calculateur 7 du drone 3B va corriger la trajectoire du drone 3B pour conserver un comportement de cible cohérent.

En outre, dans un mode de réalisation préféré, au moins l'un des drones 3 du système 1, et de préférence l'ensemble des drones 3 du système 1, sont des drones multicoptère ou multirotor, c'est-à-dire des drones avec plus de deux voilures tournantes 6 (figure 1), c'est-à-dire plus de deux rotors générateurs de portance, et par exemple quatre, six ou huit voilures tournantes 6. On utilise ainsi des drones 3 très maniables, qui sont en mesure de suivre toutes les trajectoires souhaitées, et notamment des trajectoires complexes.

Quant au dispositif 24 de gestion de mission, il est de préférence installé au sol. Dans une variante de réalisation, il peut également être installé sur un navire ou sur un véhicule. Par conséquent, les actions décrites ci-dessous qui sont réalisées par un opérateur à partir du sol, pourraient également être réalisées par un opérateur se trouvant sur un navire.

Le dispositif 24 de gestion de mission, et en particulier une ou des unités 27 de réalisation de mission, peuvent être utilisés par un ou des opérateurs pour commander les drones à partir du sol ou depuis un navire lors d'une étape de réalisation de la mission, précisée ci-dessous. De préférence, bien que non exclusivement, on prévoit un seul opérateur. On peut toutefois également prévoir un opérateur par drone du système 1.

Le dispositif 24 de gestion de mission comporte, comme représenté sur la figure 4 :
- au moins une unité 26 de préparation de mission ;
- au moins une unité 27 de réalisation de mission ;
- au moins une unité 28 de contrôle de mission.

L'unité 26 de préparation de mission du dispositif 24 de gestion de mission est utilisée par un opérateur pour préparer la mission (de simulation de cible aérienne et plus généralement de test) et notamment pour définir la trajectoire du ou des drones 3, la trajectoire de la cible aérienne ou des cibles aériennes, et les caractéristiques du signal émis par le ou les générateurs de signal 10, 11 du ou des drones 3.

Avec l'unité 26 est également réalisée une phase de positionnement des senseurs (en terrestre fixe), de définition des zones de vol, et de vérification de la cohérence des trajectoires des drones, et de calage fin de la trajectoire des cibles aériennes par rapport à la position des senseurs.

L'unité 27 de réalisation de mission du dispositif 24 de gestion de mission est destinée à la mise en œuvre de la mission (de simulation de cible aérienne et plus généralement de test).

Quant à l'unité 28 de contrôle du dispositif 24 de gestion de mission, elle a pour but de contrôler la mission, lors de sa réalisation. Pour ce faire, l'unité 28 de contrôle de mission comprend (ou est associé à) au moins un dispositif de modification de trajectoire 20 (figure 4) qui est configuré pour modifier la trajectoire d'au moins un drone 3, comme précisé ci-dessous. Si le dispositif de modification de trajectoire 20 est utilisé pour modifier la trajectoire de la cible simulée, il doit modifier la trajectoire de tous les drones 3 (simulant cette cible) et de tous les générateurs de signal correspondants pour pouvoir continuer de simuler correctement la cible.

Bien que non exclusivement, ledit système 1 de simulation de cibles aériennes, tel que décrit ci-dessus, peut faire partie d'un système de test 9 qui est destiné à tester un système de surveillance 8. Le système de surveillance 8 est, de préférence, un système de surveillance de type multi-senseur hétérogène, c'est-à-dire qui comprend une pluralité de senseurs (ou capteurs ou détecteurs) hétérogènes (c'est-à-dire de types différents).

Dans l'exemple de la figure 6, le système de surveillance 8 comprend, notamment, une pluralité de radars 12 et de senseurs infrarouges 13. Le système de surveillance 8 peut également comprendre d'autres senseurs tels que précités.

Le système de surveillance 8 est destiné à surveiller une zone géographique particulière autour de son installation. Cette zone géographique est de préférence une zone géographique terrestre, mais peut également être, au moins en partie, une zone maritime. Il peut notamment s'agir d'un site, d'un bâtiment, ou d'un ou de plusieurs navires ou de véhicules par exemple en convoi.

Dans un mode de réalisation particulier, le système de surveillance 8 fait partie d'un système d'arme 30, qui est destiné par exemple à protéger cette zone géographique, et qui comprend, en plus du système de surveillance 8, des armes (non représentées) permettant en particulier de neutraliser des engins volants hostiles (notamment des engins volants hostiles, détectés par le système de surveillance 8). Dans ce cas, le système de test 9 est destiné à tester le système de surveillance 8 et/ou les différentes chaînes du système d'arme 30.

Le système de surveillance 8 peut donc être déployé sur terre (à poste fixe, ou de façon mobile sur un véhicule terrestre), ou en mer (sur un navire, militaire ou civil). Il peut également être utilisé pour des systèmes non militaires, par exemple un système anti-drone d'un site sensible civil comme une centrale électrique, un réseau de senseurs d'un aéroport, ...

Si le système 1 fait partie d'un système de test 9, il est ainsi en mesure de tester des moyens de détection (ou senseurs) de types différents.

Le système 1, tel que décrit ci-dessus, permet de mettre en œuvre une méthode M de simulation de cibles aériennes. Cette méthode M comprend, comme représenté sur la figure 7, notamment une étape E1 de préparation de la mission et une étape E2 de réalisation de la mission, au cours de laquelle est mise en œuvre une sous-étape E2A de contrôle de la mission.

Lors de l'étape E1 de préparation de la mission, un opérateur utilise l'unité 26 de préparation de mission, pour définir des paramètres de mission, et en particulier pour définir :
- les caractéristiques permettant à l'unité 26 de déterminer la trajectoire à suivre par chaque drone 3 du système 1, qui sera utilisée lors de la réalisation de la mission ; et
- les caractéristiques du signal qui sera émis par le ou les générateurs de signal de chaque drone 3 du système 1.

Les paramètres de mission, et en particulier la trajectoire et les caractéristiques du signal à émettre, déterminés lors de la préparation de la mission, sont enregistrés dans une base de données du dispositif 24, et par exemple de l'unité 27 et/ou dans une base de données du calculateur 7 du drone 3.

Ces paramètres de mission sont transmis aux moyens 5 et aux générateurs de signal soit tels quels (s'ils sont utilisables tels quels) en transitant via le calculateur 7, soit si nécessaire après traitement par le calculateur 7 pour les adapter à des ordres utilisables par les moyens 5 et les générateurs de signal.

Lors de l'étape E2 de réalisation de la mission, on fait voler chaque drone 3 du ou des ensembles 31A, 31B de drones du système 1 à proximité (généralement à une distance inférieure à 2 kilomètres) du système de surveillance 8. Plus précisément, chaque drone 3 vole (de façon autonome ou sous la commande d'un opérateur au sol) suivant la trajectoire prédéterminée correspondante (définie par les paramètres de la mission). De plus, lors de ce vol, les générateurs de signal des drones 3 émettent les signaux correspondants (définis par les paramètres de la mission).

La trajectoire suivie et les signaux émis par chaque drone 3 sont tels qu'un senseur du système de surveillance 8 croît détecter un engin volant (c'est-à-dire une cible aérienne 2) volant à une distance plus grande du système de surveillance 8, et qu'il considère cet engin volant comme étant réel. Le drone 3 simule ainsi une cible aérienne 2.

De plus, tous les drones de chaque ensemble 31A, 31B de drones sont synchronisés pour simuler une seule et même cible aérienne. A titre d'exemple, dans le mode de réalisation de la figure 6, les drones 3A et 3B de l'ensemble 31A sont synchronisés pour simuler la cible aérienne 2A, et les drones 3C et 3D de l'ensemble 31B sont synchronisés pour simuler la cible aérienne 2B.

Les drones de l'ensemble 31A, 31B sont commandés pour voler et pour émettre des signaux, afin de satisfaire cette synchronisation. Cette synchronisation de tous les drones de l'ensemble 31A, 31B est réalisée, à la fois :
- spatialement. Les drones de l'ensemble 31A, 31B sont commandés pour se déplacer dans l'espace afin de suivre les trajectoires prescrites de manière à se trouver à une position prescrite (sur la trajectoire prescrite correspondante) ;
- temporellement. Les drones de l'ensemble 31A, 31B sont commandés pour se déplacer dans l'espace afin de suivre les trajectoires prescrites de manière à se trouver à la position prescrite à un instant donné ; et
- pour être cohérents par rapport à la cible aérienne 2 qu'ils simulent et éviter les risques de collision.

Par cette synchronisation (triple), les drones de l'ensemble 31A, 31B de drones sont commandés pour simuler, efficacement, une seule et même cible aérienne.

Lors de l'étape E2 de réalisation de la mission, le calculateur 7 de chaque drone 3 utilise donc la trajectoire (ou trajectoire prescrite) déterminée en préparation de mission pour envoyer des ordres aux moyens 5 afin qu'ils fassent voler le drone 3 le plus proche possible de cette trajectoire prescrite.

Lors de l'étape E2 de réalisation de la mission, un contrôle de la mission est réalisé (à la sous-étape E2A de contrôle de la mission) notamment à partir du sol à l'aide de l'unité 28 de contrôle de mission. Ce contrôle de mission permet notamment de détecter lorsque le drone s'écarte de la trajectoire prescrite (qu'il doit suivre).

Dans ce cas, la trajectoire du drone est corrigée (en temps réel) par le dispositif de modification de trajectoire 20, 21 pour que le drone revienne sur la trajectoire prescrite et la suive de nouveau.

Dans le cadre de la présente invention, les senseurs du système 1 peuvent être installés à poste fixe au sol. Ils peuvent également être montés sur un engin mobile, par exemple un engin terrestre, un navire ou un engin volant statique tel qu'un ballon attaché au sol par un fil.

Dans un mode de réalisation préféré, le système de surveillance 8 et le système d'arme 30 (qui comprend le système de surveillance 8) sont installés au sol (non représenté) et représentent des systèmes (de défense) sol-air.

Dans une première variante de réalisation, le système de surveillance 8 et le système d'arme 30 comprenant le système de surveillance 8 peuvent être installés (ou montés) sur un ou plusieurs navires (non représentés) et représenter des systèmes (de défense) mer-air ou sur un ou plusieurs véhicules fixes ou mobiles (non représentés).

En outre, dans une seconde variante de réalisation, par exemple au niveau d'un port, une partie du système de surveillance 8 et/ou du système d'arme 30 peut être installée au sol (non représenté) et le reste du système de surveillance 8 et/ou du système d'arme 30 peut être installé sur un ou des navires (non représentés).

Le système 1, tel que décrit ci-dessus, présente de très nombreux avantages. En particulier, ce système 1 est en mesure :
- de simuler, simultanément, de nombreuses cibles aériennes ;
- de simuler une même cible aérienne pour stimuler simultanément une pluralité de senseurs et plus particulièrement des senseurs de types différents ;
- de simuler tout type des cibles aériennes (ou engins volants), telles que par exemple un avion, un hélicoptère, un drone, un missile, ..., ou même des navires (qui évoluent à vitesse faible et à une hauteur proche de 0 mètre) ; et
- de simuler des cibles aériennes volant suivant tout type de trajectoire.

Le système de test 9 est ainsi en mesure de tester la chaîne complète du système d'arme 30, depuis la détection jusqu'à l'engagement (hors missile en vol), et ainsi au moins l'une des caractéristiques suivantes :
- la capacité de surveillance, de détection et de suivi de senseurs ;
- le bon comportement des algorithmes du système d'arme qui effectue la fusion de données, le traitement des données pour l'évaluation de la menace, le plan d'engagement, .... ; et
- la chaîne d'engagement avec le bon fonctionnement des algorithmes et des senseurs pendant cette phase.

Le système 1 et/ou le système de test 9 peuvent être utilisés dans de nombreuses applications différentes, et en particulier :
- pour la formation, notamment d'opérateurs du système de surveillance 8 et/ou du système d'arme 30 ;
- pour l'entraînement, notamment d'opérateurs du système de surveillance 8 et/ou du système d'arme 30 ;
- pour la calibration du système de surveillance 8 et/ou du système d'arme 30 ;
- pour des essais du système de surveillance 8 et/ou du système d'arme 30 ;
- pour la validation du système de surveillance 8 et/ou du système d'arme 30 ; et
- pour une démonstration.

## Revendications

1. Système de simulation d'au moins une cible aérienne, ledit système (1) comprenant au moins un drone (3, 3A à 3D), ledit drone (3, 3A à 3D) étant équipé d'un premier générateur de signal (10) d'un premier type, qui est monté sur le drone (3, 3A à 3D) et qui est apte à émettre un signal (S1B) représentatif d'une cible aérienne (2, 2A, 2B) à simuler, ledit drone (3, 3A à 3D) étant également équipé d'au moins un second générateur de signal (11) d'un second type différent dudit premier type, qui est également monté sur le drone (3, 3A à 3D) et qui est également apte à émettre un signal (S2) représentatif de ladite cible aérienne (2, 2A, 2B) à simuler, ledit système (1) de simulation comportant un unique calculateur (7) qui participe à la commande de tous les générateurs de signal (11, 12) montés sur le drone (3), ledit système (1) de simulation étant apte à simuler une cible aérienne (2, 2A, 2B) qui est simulée comme étant située à une distance donnée à l'aide du drone (3, 3A à 3D) volant à une distance plus réduite.

2. Système selon la revendication 1,
**caractérisé en ce que** ledit premier type et/ou ledit second type correspondent à au moins l'un des types suivants de générateur de signal :
- un générateur de signal radiofréquence (10) ;
- un générateur de signal infrarouge (11) ;
- un générateur de signal visible ;
- un générateur de signal coopératif.

3. Système selon l'une quelconque des revendications précédentes, **caractérisé en ce qu'**il comprend une pluralité de drones, dont au moins certains sont pourvus d'au moins deux générateurs de signal de types différents, chacun desdits drones étant configuré pour simuler une cible aérienne différente de celle simulée par un autre drone.

4. Système selon l'une quelconque des revendications précédentes, **caractérisé en ce qu'**il comprend au moins deux drones (3A à 3D) pourvus de générateur de signal, dont au moins l'un est pourvu d'au moins deux générateurs de signal de types différents, lesdits drones (3A à 3D) formant un ensemble (31A, 31B) de drones, et **en ce que** ledit système (1) comporte un dispositif de synchronisation (29) configuré pour synchroniser les drones de l'ensemble (31A, 31B) de drones afin qu'ils simulent une seule et même cible (2A , 2B), le dispositif de synchronisation (29) étant configuré pour synchroniser les drones (3A à 3D) de l'ensemble (31A, 31B) de drones, à la fois :
- en temps ;
- dans l'espace ; et
- pour être cohérents par rapport à la cible aérienne (2A, 2B) qu'ils simulent et pour éviter des risques de collision.

5. Système selon l'une quelconque des revendications précédentes, **caractérisé en ce qu'**il comprend un dispositif (24) de gestion de mission configuré pour pouvoir communiquer avec le ou les drones.

6. Système selon la revendication 5,
**caractérisé en ce que** le dispositif (24) de gestion de mission comporte au moins l'une des unités suivantes :
- au moins une unité (26) de préparation de mission ;
- au moins une unité (27) de réalisation de mission ;
- au moins une unité (28) de contrôle de mission.

7. Système selon l'une quelconque des revendications précédentes, **caractérisé en ce qu'**il comprend au moins un dispositif de modification de trajectoire (20, 21) qui est configuré pour modifier la trajectoire du ou des drones.

8. Système selon la revendication 5,
**caractérisé en ce qu'**il comporte au moins un dispositif de modification de trajectoire (20) qui fait partie du dispositif (24) de gestion de mission et qui est configuré pour émettre des ordres de correction de trajectoire au drone (3), qui sont générés automatiquement et/ou par un opérateur.

9. Système selon l'une des revendications 7 et 8,
**caractérisé en ce qu'**il comporte au moins un dispositif de modification de trajectoire (21) qui est monté sur le drone (3) et qui est configuré pour modifier la trajectoire dudit drone (3).

10. Procédé de simulation d'au moins une cible aérienne, ledit procédé utilisant au moins un drone (3, 3A à 3D), ledit procédé comprenant une première étape d'émission au cours de laquelle un premier générateur de signal (10) d'un premier type, qui est monté sur ledit drone (3, 3A à 3D), émet un premier signal (S1B) représentatif d'une cible aérienne (2A, 2B) à simuler, et au moins une seconde étape d'émission au cours de laquelle un second générateur de signal (11) d'un second type différent dudit premier type, qui est également monté sur ledit drone (3, 3A à 3D), émet un second signal (S2) représentatif de ladite cible aérienne (2A, 2B) à simuler, ledit premier signal (S1B) et ledit second signal (S2) étant de types différents, tous les générateurs de signal (11, 12) montés sur le drone (3) étant commandés à l'aide d'un unique calculateur (7), ledit procédé de simulation étant apte à simuler une cible aérienne (2, 2A, 2B) qui est simulée comme étant située à une distance donnée à l'aide du drone (3, 3A à 3D) volant à une distance plus réduite.

11. Procédé selon la revendication 10,
**caractérisé en ce qu'**il utilise au moins deux drones (3A à 3D) pourvus de générateur de signal, dont au moins l'un est pourvu d'au moins deux générateurs de signal de types différents, lesdits drones formant un ensemble (31A, 31B) de drones, et **en ce que** tous les drones (3A à 3D) de l'ensemble de drones sont synchronisés pour simuler une seule et même cible (2A, 2B), les drones (3A à 3D) de l'ensemble (31A, 31B) de drones étant synchronisés, à la fois :
- en temps ;
- dans l'espace ; et
- pour être cohérents par rapport à la cible aérienne (2A, 2B) qu'ils simulent et pour éviter des risques de collision.

12. Système de test pour tester un système de surveillance, en particulier d'un système d'arme multi-senseur hétérogène,
**caractérisé en ce qu'**il comprend ledit système de surveillance (8) et au moins un système (1) de simulation de cible aérienne selon l'une quelconque des revendications 1 à 9.

13. Système selon la revendication 12,
**caractérisé en ce que** des senseurs (12, 13) du système de surveillance (8), destinés à recevoir les signaux de deux générateurs de signaux (10, 11) équipant un même drone (3), sont espacés l'un de l'autre d'une distance (d0) telle que l'erreur de localisation de cible aérienne qui découle de cette distance (d0) et de la distance (D1) entre les senseurs (12, 13) et le drone (3), reste inférieure aux marges d'erreur ou de localisation desdits senseurs (12, 13).

14. Système selon l'une des revendications 12 et 13,
**caractérisé en ce que** le système de surveillance (8) comprend comme senseurs, au moins certains des éléments suivants :
- un ou plusieurs radars (12) ;
- un ou plusieurs senseurs optiques (13) ;
- un ou plusieurs senseurs coopératifs ;
- un ou plusieurs senseurs passifs.
